(19) Europäisches Patentamt
European Patent Office
Office européen des brevets

(11) **EP 4 390 469 A1**

(12) **EUROPEAN PATENT APPLICATION**
published in accordance with Art. 153(4) EPC

(43) Date of publication:
**26.06.2024 Bulletin 2024/26**

(21) Application number: **22858046.0**

(22) Date of filing: **01.02.2022**

(51) International Patent Classification (IPC):
**G01W 1/00** (2006.01)    **G06Q 50/26** (2012.01)

(52) Cooperative Patent Classification (CPC):
**G01W 1/00; G06Q 50/26**

(86) International application number:
**PCT/JP2022/003705**

(87) International publication number:
**WO 2023/021721 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.08.2021 JP 2021132996**

(71) Applicant: **MITSUBISHI ELECTRIC
CORPORATION
Chiyoda-ku
Tokyo 100-8310 (JP)**

(72) Inventors:
• **KURIHARA, Kohei
Tokyo 100-8310 (JP)**
• **TOYODA, Yoshitaka
Tokyo 100-8310 (JP)**

(74) Representative: **Hoffmann Eitle
Patent- und Rechtsanwälte PartmbB
Arabellastraße 30
81925 München (DE)**

(54) **INUNDATION DEPTH ESTIMATION DEVICE, INUNDATION DEPTH ESTIMATION METHOD, INUNDATION DEPTH ESTIMATION PROGRAM, AND TRAINING DEVICE**

(57)     An inundated area dividing unit 24 divides an inundated area into one or more divided areas based on a boundary indicated in inundation estimation data 33 indicating the boundary where a water level changes when inundation occurs. For each of the one or more divided areas, a water level calculation unit 25 calculates the water level in a subject divided area, from an elevation of a boundary area of the subject divided area. A depth calculation unit 26 calculates a flood depth at a subject point, from the elevation at the subject point and the water level in the divided area including the subject point.

Fig. 1

## Description

## Technical Field

The present disclosure relates to a technique to estimate a flood depth when flood damage occurs.

## Background Art

A ground sensor has been conventionally used as a method of grasping inundation damage when flood damage such as a flood, a heavy rain, or a typhoon occurs. The method of grasping inundation using the ground sensor is useful for grasping an inundation situation at a specific spot such as an elevator or a power plant. However, in a situation where damage occurs over a wide area, the method of grasping inundation using the ground sensor is not suitable for obtaining information in a directional extent in an aspect indicating such that which area is more affected.

A flood depth estimation method using remote sensing data has been proposed as a method of grasping inundation damage in a wide area (refer to Non-Patent Literature 1). In Non-Patent Literature 1, an area (an inundated area) of inundation is estimated using an SAR satellite image, and a depth of inundation is calculated from elevation information within the inundated area.

## Citation List

## Patent Literature

Non-Patent Literature 1: Honda, Kenichi et al., "A Study on Rapid Estimation of Inundation Area and Flood Depth during Heavy Rain Disaster Using Satellite SAR." Journal of Remote Sensing Society of Japan, Vol. 40 No. 3 (2020), pp. 158-162.

## Summary of Invention

## Technical Problem

In Non-Patent Literature 1, a flood depth is expressed by a difference between a water level and an absolute value of elevation information. Therefore, in Non-Patent Literature 1, in a case of large-scale flood damage that floods a wide area, the result is that severe inundation occurs in an area with a low elevation. However, the actual inundation situation is affected by factors such as a direction of a flood water flow and a catchment area which is an area where water gathers due to an elevation with a gentle gradient, and cannot be expressed only with an absolute value of the elevation.

The present disclosure aims to make it possible to accurately estimate a flood depth at time of flood damage.

## Solution to Problem

A flood depth estimation apparatus according to the present disclosure includes:

a data acquisition unit to acquire inundated area data indicating an inundated area in a subject area, inundation estimation data indicating for the subject area, a boundary where a water level changes when inundation occurs, and elevation data indicating an elevation at each point in the subject area;

an inundated area dividing unit to divide the inundated area indicated in the inundated area data acquired by the data acquisition unit, into one or more divided areas based on the boundary indicated in the inundation estimation data;

for each of the one or more divided areas obtained by the division by the inundated area dividing unit, a water level calculation unit to calculate the water level in a subject divided area, from the elevation indicated in the elevation data on a boundary area of the subject divided area; and

for the each point, a depth calculation unit to calculate a flood depth at a subject point, from the elevation indicated in the elevation data on the subject point, and the water level calculated by the water level calculation unit for the divided area including the subject point.

## Advantageous Effects of Invention

In the present disclosure, a flood depth is estimated using inundation estimation data indicating for a subject area, a boundary where a water lever changes when inundation occurs. The flood depth can be estimated with high accuracy by using the inundation estimation data.

## Brief Description of Drawings

Fig. 1 is a configuration diagram of a flood depth estimation apparatus 10 according to Embodiment 1.
Fig. 2 is a flowchart of overall processing of the flood depth estimation apparatus 10 according to Embodiment 1.
Fig. 3 is a flowchart of a flood depth estimation process according to Embodiment 1.
Fig. 4 is an explanatory diagram of an inundated area dividing process according to Embodiment 1.
Fig. 5 is an explanatory diagram of effects of Embodiment 1.
Fig. 6 is a configuration diagram of the flood depth estimation apparatus 10 according to Modification 2.
Fig. 7 is a configuration diagram of the flood depth estimation apparatus 10 according to Embodiment 3.
Fig. 8 is a configuration diagram of the flood depth estimation apparatus 10 according to Modification 4.
Fig. 9 is a configuration diagram of a training apparatus 60 according to Embodiment 4.

**Description of Embodiments**

Embodiment 1.

*** Description of Configuration ***

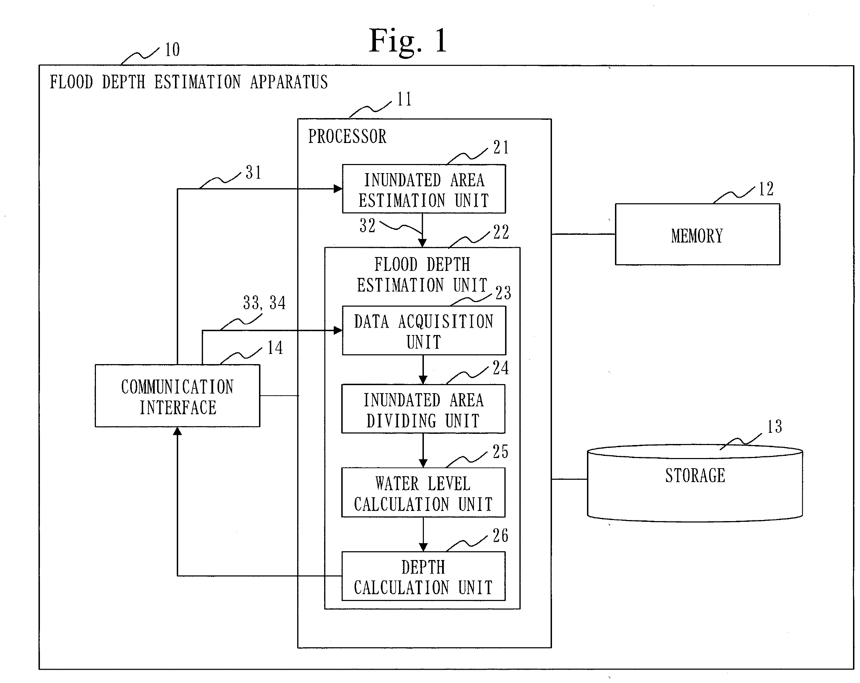

A configuration of a flood depth estimation apparatus 10 according to Embodiment 1 will be described with reference to Fig. 1.

The flood depth estimation apparatus 10 is a computer.

The flood depth estimation apparatus 10 includes hardware pieces of a processor 11, a memory 12, a storage 13, and a communication interface 14. The processor 11 is connected with other hardware devices via signal lines and controls these other hardware devices.

The processor 11 is an Integrated Circuit (IC) that performs processing. Specific examples of the processor 11 are a Central Processing Unit (CPU), a Digital Signal Processor (DSP), and a Graphics Processing Unit (GPU).

The memory 12 is a storage device that stores data temporarily. Specific examples of the memory 12 are a Static Random Access Memory (SRAM) and a Dynamic Random Access Memory (DRAM).

The storage 13 is a storage device that stores data. A specific example of the storage 13 is a Hard Disk Drive (HDD). Further, the storage 13 may be a portable recording medium such as a Secure Digital (SD, registered trademark) memory card, a CompactFlash (CF, registered trademark), a NAND flash, a flexible disk, an optical disc, a compact disc, a Blu-ray (registered trademark) disc, or a Digital Versatile Disk (DVD).

The communication interface 14 is an interface for communication with external devices. Specific examples of the communication interface 14 are an Ethernet (registered trademark) port, a Universal Serial Bus (USB) port, and a High-Definition Multimedia Interface (HDMI, registered trademark) port.

The flood depth estimation apparatus 10 includes an inundated area estimation unit 21 and a flood depth estimation unit 22, as functional components. The flood depth estimation unit 22 includes a data acquisition unit 23, an inundated area dividing unit 24, a water level calculation unit 25, and a depth calculation unit 26. Functions of the individual functional components of the flood depth estimation apparatus 10 are implemented by software.

The storage 13 stores programs that implement the functions of the individual functional components of the flood depth estimation apparatus 10. These programs are loaded by the processor 11 into the memory 12, and executed by the processor 11. As a result, the functions of the individual functional components of the flood depth estimation apparatus 10 are implemented.

Fig. 1 illustrates only one processor as the processor 11. However, there may be a plurality of processors 11. The plurality of processors 11 may corporate with each other to execute the programs that implement the individual functions.

*** Description of Operation ***

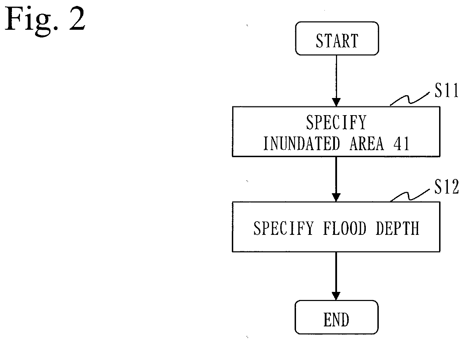

Operation of the flood depth estimation apparatus 10 according to Embodiment 1 will be described with reference to Fig. 2 through Fig. 4.

An operational procedure of the flood depth estimation apparatus 10 according to Embodiment 1 is equivalent to a flood depth estimation method according to Embodiment 1. Further, a program that implements the operation of the flood depth estimation apparatus 10 according to Embodiment 1 is equivalent to a flood depth estimation program according to Embodiment 1.

Overall processing of the flood depth estimation apparatus 10 according to Embodiment 1 will be described with reference to Fig. 2.

(Step S 11: Inundated Area Estimation Process)

The inundated area estimation unit 21 estimates from an input image 31, an inundated area 41 in a subject area 40, and generates inundated area data 32 indicating the inundated area 41.

The input image 31 is remote sensing data acquired by performing detection on the subject area 40. It is conceivable that remote sensing is performed using an aircraft or an Unmanned Aerial Vehicle (UAV, a drone) as well as an optical satellite, a Synthetic Aperture Radar (SAR) satellite, or the like.

When estimating the inundated area 41 using an optical image as the remote sensing data, the inundated area estimation unit 21 is conceivable to use, for example, a Normalized Difference Water Index (NDWI) which is a water index using an image of a near-infrared band. If $\rho_{NIR}$ and $\rho_{SWIR}$ are measured values in a Near Inreared (NIR) band and a Short-Wave Infrared (SWIR) band at a certain point, respectively, NDWI is expressed by Equation 1.

[Equation 1]

$$NDWI = \frac{\rho_{NIR} - \rho_{SWIR}}{\rho_{NIR} + \rho_{SWIR}}$$

There is also an inundated area estimation method that uses a visible band in place of the infrared band.

When estimating the inundated area 41 using an SAR image as the remote sensing data, as described in Non-Patent Literature 1, for example, the inundated area estimation unit 21 is conceivable to compare SAR images acquired before and after occurrence of flood damage, and extract an area where a backscattering height has decreased, as the inundated area.

The inundated area 41 can be specified not only using the above methods but also using various remote sensing data acquired by a combination of a sensor and a measurement device.

(Step S12: Flood Depth Estimation Process)

The flood depth estimation unit 22 takes the inundated area data 32 generated in step S11, inundation estimation data 33, and elevation data 34, as input, and estimates a flood depth at each point in the subject area 40.

The inundation estimation data 33 indicates a boundary where a water level changes when inundation occurs in the subject area 40. Further, the inundation estimation data 33 indicates a river and a tributary (hereinafter referred to as a river and the like) in the subject area 40.

A specific example of the inundation estimation data 33 is a hazard map created by flood simulation or the like when a river embankment breaks. The hazard map is separated or labeled with each area according to the level of inundation water level when flood damage occurs. The inundation estimation data 33 in Japan is, for example, a hazard map published by the Geospatial Information Authority of Japan (https://disaportal.gsi.go.jp/hazardmap/copyright/opendata.html). It is also possible to use not only this but also a hazard map created by a local government or the like as the inundation estimation data 33.

The elevation data 34 indicates an elevation at each point in the subject area 40.

The elevation data 34 is a Digital Elevation Model (DEM) created by a method such as laser surveying or photogrammetry. In Japan, 5m mesh DEM5A or the like published by the Geospatial Information Authority of Japan can be used as the elevation data 34. In all over the world, Shuttle Radar Topography Mission (SRTM) -3 can be used as the elevation data 34. Alternatively, it is also possible to use DEM data with high vertical resolution as the elevation data 34.

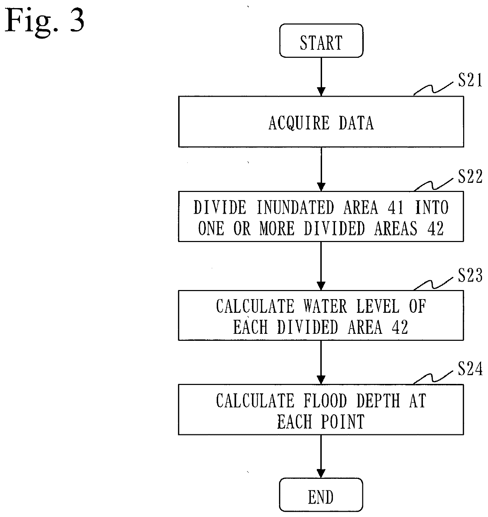

The flood depth estimation process (step S12 of Fig. 2) according to Embodiment 1 will be described with reference to Fig. 3.

(Step S21: Data Acquisition Process)

The data acquisition unit 23 acquires the inundated area data 32 generated in step S11, the inundation estimation data 33, and the elevation data 34.

(Step S22: Inundated Area Dividing Process)

The inundated area dividing unit 24 divides the inundated area 41 indicated in the inundated area data 32 acquired in step S21, into one or more divided areas 42 based on the boundary and the river and the like indicated in the inundation estimation data 33. At this time, the inundated area dividing unit 24 divides the inundated area 41 into the one or more divided areas 42, by extracting boundary information indicating positions of the boundary and the river and the like with reference to separations or labels in the inundation estimation data 33.

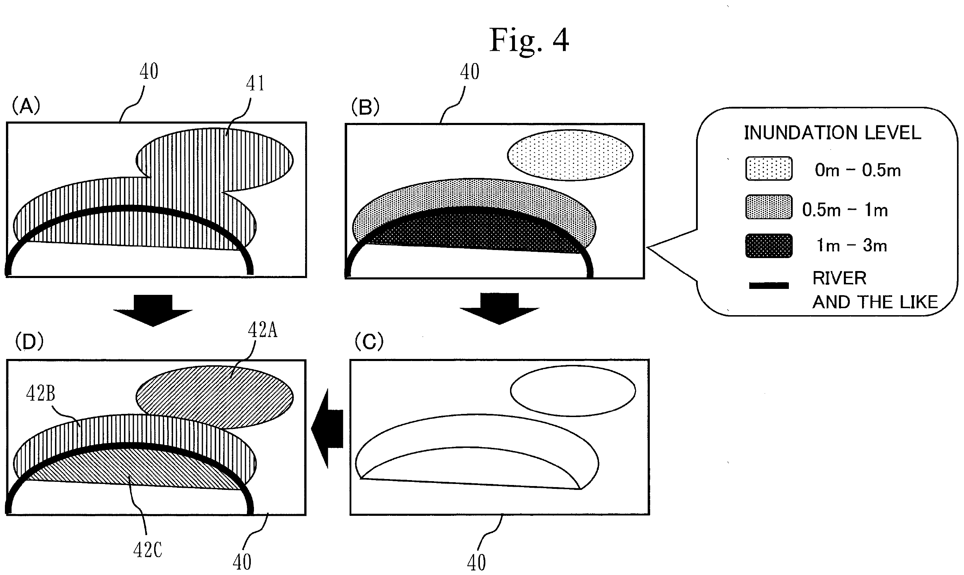

A specific description will be given with reference to Fig. 4. In Fig. 4, (A) illustrates the inundated area data 32. (B) is a schematic diagram of the inundation estimation data 33. (C) illustrates the boundary information extracted from the inundation estimation data 33. (D) is a schematic diagram illustrating a state in which the inundated area 41 illustrated in (A) is divided into the one or more divided areas 42 based on the boundary and the river and the like indicated in the boundary information indicated in (C).

In (B), the inundation estimation data 33 is labeled for each level of inundation water level at time of flood damage, and also the position of the river and the like is indicated. Therefore, it is possible to specify a boundary of an area to which a different label is given. Accordingly, it is possible to obtain the boundary information indicated in (C), from the specified boundary and the river and the like indicated in the inundation estimation data 33. Then, as illustrated in (D), it is possible to divide the inundated area 41 into the one or more divided areas 42, by overlapping the inundated area 41 indicated in (A) with the boundary and the river and the like indicated in the boundary information indicated in (C). When one inundated area 41 includes a boundary or a river and the like, the inundated area 41 is divided into a plurality of divided areas 42.

(Step S23: Water Level Calculation Process)

For each of the one or more divided areas 42 obtained by the division in step S22, the water level calculation unit 25 calculates the water level in the subject divided area 42, from the elevation indicated in the elevation data 34 for a boundary area 43 of the subject divided area 42.

The boundary area 43 is an area for a boundary portion with other areas in the subject divided area 42. For example, in (D) of Fig. 4, an area on the line surrounding divided area 42A is the boundary area 43 for the divided area 42A, an area on the line surrounding divided area 42B is the boundary area 43 for the divided area 42B, and an area on the line surrounding divided area 42C is the boundary area 43 for the divided area 42C.

Specifically, the water level calculation unit 25 calculates the water level in the entire subject divided area, from a statistic of elevations indicated in elevation data on a plurality of points in the boundary area 43 of the subject divided area 42. Specific examples of the statistic are conceivable to be a mean value, a median value, a mode value, and a combination of these values. Here, the water level calculation unit 25 calculates the water level using the statistic as it is, or calculates the water level by adding a correction value to the statistic.

(Step S24: Depth Calculation Process)

The depth calculation unit 26 calculates for each point in the subject area 40, a flood depth at a subject point, from the elevation indicated in the elevation data 34 for the subject point and the water level calculated in step S23 for the divided area 42 including the subject point. Specifically, the depth calculation unit 26 calculates the flood depth by subtracting the elevation indicated in the elevation data 34 for the subject point, from the water level calculated in step S23 for the divided area 42 including the subject point.

*** Effects of Embodiment 1 ***

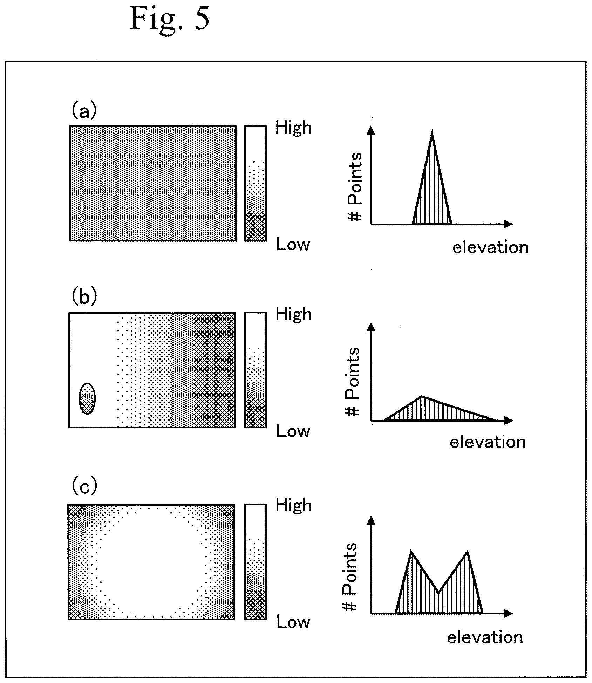

As described above, the flood depth estimation apparatus 10 according to Embodiment 1 estimates a flood depth, using the inundation estimation data 33 indicating for a subject area, a boundary where a water level changes when inundation occurs. By using the inundation estimation data 33, it is possible to estimate the flood depth in consideration of an influence on factors such as a direction of a flood water flow and a catchment area which is an area where water gathers due to an elevation with a gentle gradient, and it is possible to estimate the flood depth with high accuracy.
As a result, it is possible to estimate the flood depth with high accuracy even in an event of large-scale flood damage that covers a wide inundated area.
A specific description will be given with reference to Fig. 5. (a), (b), and (c) of Fig. 5 indicate a histogram of a set of values of elevation information, for a flat area, a gradient area, and a non-flat area, respectively. In the case of the flat area of (a), the base of the set is narrow, and a deviation between the elevation and the water level in the map is small whichever the statistic described above is selected. In the case of the gradient area of (b), the water level is a value approximately near the middle of the elevation whichever the statistic described above is selected. Here, if there is locally an area (an area X in (b) of Fig. 5) with a low elevation, in an area with a high elevation, it is assumed that deep inundation occurs due to an elevation difference. However, in (b), the water level is underestimated for the area with the high elevation, so that the flood depth may be estimated to be smaller than the actual value. In the case of non-flat area of (c), the same phenomenon as in the case of the gradient area of (b) may also occur.
The flood depth estimation apparatus 10 according to Embodiment 1 divides the inundated area 41 into one or more divided areas 42, using a boundary and a river and the like indicated in the inundation estimation data 33, where a water level changes when inundation occurs, and calculates a water level from a statistic of the boundary area 43 for each divided area 42. Since the inundated area 41 is divided using the inundation estimation data 33, a height difference within the area is small in the divided area 42.
Therefore, it is possible to prevent one divided area 42 from being a gradient area with an excessive gradient, and from being a non-flat area with excessive unevenness. That is, a state such as (b) or (c) of Fig. 5 is less likely to occur. As a result, by calculating the water level from the statistic of the boundary area 43 for the divided area 42, it is possible to accurately calculate the water level for the divided area 42. If the water level is calculated with high accuracy, the flood depth can also be estimated with high accuracy.
The flood depth at time of inundation cannot be estimated only with the inundation estimation data 33. However, by using the inundation estimation data 33, it is possible to accurately grasp the boundary where the water level changes when the inundation occurs.

*** Other Configurations ***

<Modification 1>

In Embodiment 1, the inundated area estimation unit 21 estimates the inundated area 41, and generates the inundated area data 32. However, the flood depth estimation unit 22 may acquire the inundated area data 32 generated outside the flood depth estimation apparatus 10.

<Modification 2>

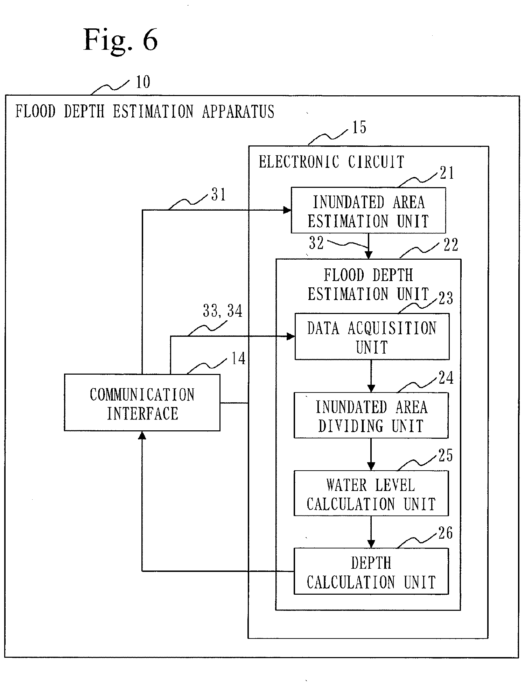

In Embodiment 1, the individual functional components are implemented by software. However, as Modification 2, the individual functional components may be implemented by hardware. Regarding this Modification 2, points that differ from Embodiment 1 will be described.
A configuration of the flood depth estimation apparatus 10 according to Modification 2 will be described with reference to Fig. 6.
When the individual configuration components are implemented by hardware, the flood depth estimation apparatus 10 includes an electronic circuit 15 in place of the processor 11, the memory 12, and the storage 13. The electronic circuit 15 is a dedicated circuit that implements the functions of the individual functional components, a function of the memory 12, and a function of the storage 13.
The electronic circuit 15 is assumed to be a single circuit, a composite circuit, a programed processor, a parallel-programmed processor, a logic IC, a Gate Array (GA), an Application Specific Integrated Circuit (ASIC), or a Field-Programmable Gate Array (FPGA).

The individual functional components may be implemented by one electronic circuit 15. The individual functional components may be decentralized into a plurality of electronic circuits 15 and implemented by the plurality of electronic circuits 15.

<Modification 3>

Modification 3 may be possible in which some of the individual functional components are implemented by hardware and the remaining individual functional components are implemented by software.

The processor 11, the memory 12, the storage 13, and the electronic circuit 15 are referred to as processing circuitry. That is, the functions of the individual functional components are implemented by the processing circuitry.

Embodiment 2.

Embodiment 2 differs from Embodiment 1 in that an elevation at each point in the interior of the divided area 42 is estimated by filling the elevation of the boundary area 43 toward the interior of the divided area 42, and a water level at each point in the interior is calculated from the estimated elevation at each point in the interior. In Embodiment 2, this difference will be described and a description of the same point will be omitted.

*** Description of Operation ***

Processing of steps S23 and S24 of Fig. 3 differs from that in Embodiment 1.

In step S23, the water level calculation unit 25 estimates the elevation at each point in the interior of the subject divided area 42, by filling the elevation indicated in the elevation data 34 for each position in the boundary area 43 of the subject divided area 42 toward the interior of the subject divided area 42. As a method of filling, for example, processing is conceivable such as dilation processing by morphological operation and patch-based inpainting processing. The water level calculation unit 25 calculates from the estimated elevation at each point, the water level for that point.

In step S24, the depth calculation unit 26 calculates for each point in the subject area 40, the flood depth for a subject point, from the elevation indicated in the elevation data 34 for the subject point and the water level calculated in step S23 for the subject point. Specifically, the depth calculation unit 26 calculates the flood depth by subtracting the elevation indicated in the elevation data 34 for the subject point, from the water level calculated in step S23 for the subject point.

*** Effects of Embodiment 2***

As a result, a plurality of different water levels is calculated within one divided area 42. For example, when the divided area 42 has a slight gradient, different water levels are appropriately calculated between the high elevation side and the low elevation side. As a result, a flood depth is estimated more accurately.

Embodiment 3.

Embodiment 3 differs from Embodiment 1 in that a flood depth is estimated using a learned model 51. In Embodiment 3, this difference will be described and a description of the same point will be omitted.

*** Description of Configuration ***

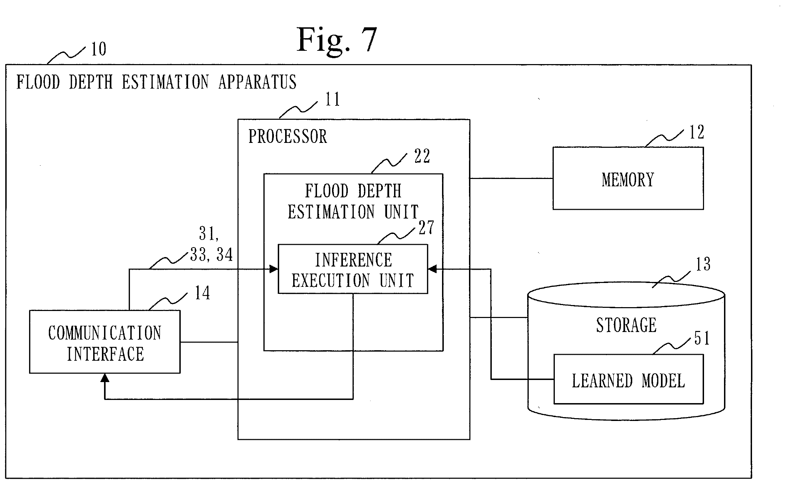

A configuration of the flood depth estimation apparatus 10 according to Embodiment 3 will be described with reference to Fig. 7.

The flood depth estimation apparatus 10 differs from that in Embodiment 1 in that the flood depth estimation apparatus 10 does not include the inundated area estimation unit 21, and the flood depth estimation unit 22 includes an inference execution unit 27 in place of the inundated area dividing unit 24, the water level calculation unit 25, and the depth calculation unit 26. A function of the inference execution unit 27 is implemented by software or hardware as with other functional components.

Further, the flood depth estimation apparatus 10 stores the learned model 51 in the storage 13. The learned model 51 is a model that has been given learning data and has completed learning according to a neural network model or the like. The learned model 51 is a model that takes the input image 31 for the subject area 40, the inundation estimation data 33, and the elevation data 34, as input, and outputs the flood depth at each point in the subject area 40. The learned model 51 has a U-Net structure in which a layer of a decoder part and a layer of an encoder part have a symmetrical structure and are connected using a skip connection.

*** Description of Operation ***

The flood depth estimation unit 22 estimates the flood depth at each point in the subject area 40, using the learned model 51 stored in the storage 13. Specifically, the flood depth estimation unit 22 acquires the flood depth at each point in the subject area 40 by inputting the input image 31, the inundation estimation data 33, and the elevation data 34, to the learned model 51.

*** Effects of Embodiment 3 ***

As described above, the flood depth estimation apparatus 10 according to Embodiment 3 estimates the flood depth using the learned model 51. Since the learned model 51 uses the inundation estimation data 33 as input, it is possible to infer the flood depth with high accuracy.

*** Other Configurations ***

<Modification 4>

In Embodiment 3, it is described that the learned model 51 is a model that takes the input image 31 as input, and outputs the flood depth. The learned model 51 may be a model that takes the inundated area data 32 as input, and outputs the flood depth.

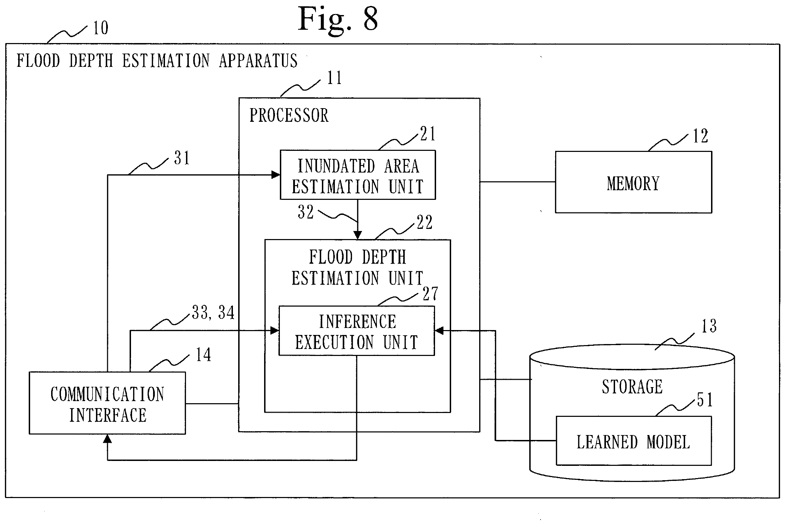

When the learned model 51 is a model that takes the inundated area data 32 in place of the input image 31, as input, and outputs the flood depth, the flood depth estimation apparatus 10 includes the inundated area estimation unit 21, as illustrated in Fig. 8. Then, after the inundated area data 32 is generated by execution of step S 11 of Fig. 3 by the inundated area estimation unit 21, the inference execution unit 27 acquires the flood depth at each point in the subject area 40 by inputting the inundated area data 32, the inundation estimation data 33, and the elevation data 34, to the learned model 51.

As described in Modification 1, the flood depth estimation unit 22 may acquire the inundated area data 32 generated outside the flood depth estimation apparatus 10. In this case, the inference execution unit 27 acquires the flood depth at each point in the subject area 40, by inputting the externally generated inundated area data 32, to the learned model 51.

Embodiment 4.

In Embodiment 4, a training apparatus 60 will be described that generates the learned model 51 used for Embodiment 3.

*** Description of Configuration ***

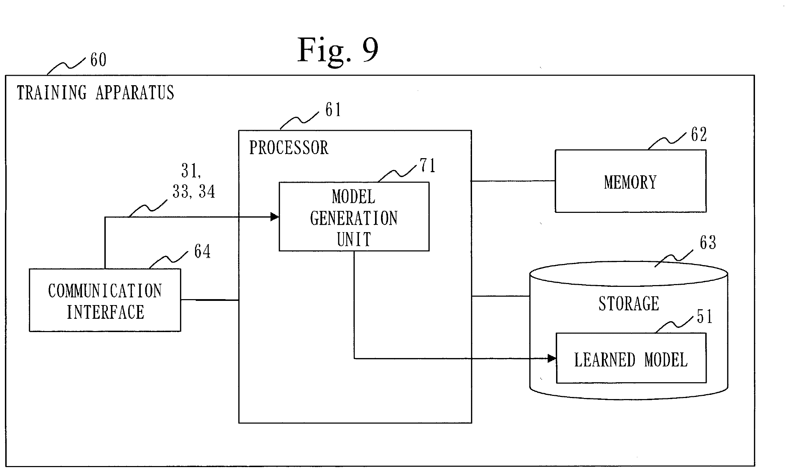

A configuration of the training apparatus 60 according to Embodiment 4 will be described with reference to Fig. 9.

The training apparatus 60 is a computer.

The training apparatus 60 includes hardware pieces of a processor 61, a memory 62, a storage 63, and a communication interface 64. The processor 61 is connected with other hardware devices via signal lines and controls these other hardware devices. The processor 61, the memory 62, the storage 63, and the communication interface 64 are the same as the processor 11, the memory 12, the storage 13, and the communication interface 14, respectively.

The training apparatus 60 includes a model generation unit 71 as a functional component. A function of the model generation unit 71 is implemented by software.

The storage 63 stores a program that implements the function of the individual functional component of the training apparatus 60. This program is loaded by the processor 61 into the memory 62, and executed by the processor 61. As a result, the function of the individual functional component of the training apparatus 60 is implemented.

Fig. 9 illustrates only one processor as the processor 61. However, there may be a plurality of processors 61. The plurality of processors 61 may corporate with each other to execute the program that implements the individual function.

*** Description of Operation ***

A known algorithm such as supervised learning, unsupervised learning, or reinforcement learning can be used as a learning algorithm used by the model generation unit 71 to generate the learned model 51. Here, as an example, a case will be described where an algorithm for the supervised learning is used. The supervised learning is a method of generating a model that is given sets of pieces of data of input and results as learning data, learns features in the learning data, and infers a result from the input.

Further, here, a case will be described where a neural network is applied. The neural network is composed of an input layer composed of a plurality of neurons, an intermediate layer (a hidden layer) composed of a plurality of neurons, and an output layer composed of a plurality of neurons. The intermediate layer is one layer or two or more layers.

The model generation unit 71 receives input of a plurality of pieces of learning data, where one set of the input image 31, the inundation estimation data 33, the elevation data 34, and the flood depth at each point, as one piece of learning data. Here, for the flood depth at each point, it is conceivable to use a value such as a value manually measured or a value measured using a green laser scanner capable of simultaneously measuring topography of the surface and the bottom of water.

Here, in the supervised learning, the input image 31, the inundation estimation data 33, the elevation data 34, and the flood depth at each point is necessary to be paired data containing the same subject. That is, the input image 31, the inundation estimation data 33, the elevation data 34, and the flood depth at each point is necessary to be data appropriately corresponding to each other. Note that this is not necessary in the case of the unsupervised learning.

The model generation unit 71 learns the flood depth at each point corresponding to the input image 31, the inundation estimation data 33, and the elevation data 34, according to the neural network model.

As a result, the model generation unit 71 generates from the input image 31, the inundation estimation data 33, and the elevation data 34, the learned model 51 for inferring the flood depth at each point. The model generation unit 71 writes the generated learned model 51 into the storage 63.

The learned model 51 generated by the model generation unit 71 is transferred to the flood depth estimation apparatus 10 using a method such as being transmitted via a transmission line, and stored into the storage 13 of the flood depth estimation apparatus 10.

*** Effects of Embodiment 4 ***

As described above, the training apparatus 60 according to Embodiment 4 is possible to generate the learned model 51 used by the flood depth estimation apparatus 10 according to Embodiment 3.

*** Other Configurations ***

<Modification 5>

The training apparatus 60 that generates the learned model 51 corresponding to Embodiment 3 has been described in Embodiment 4. When the learned model 51 corresponding to Modification 4 is generated, the learning data includes the inundated area data 32 in place of the input image 31.

<Modification 6>

The function of the model generation unit 71 which is a function of the training apparatus 60 is implemented by software. However, as with the functions of the flood depth estimation apparatus 10, the function of the model generation unit 71 may be implemented by hardware.

Further, "unit" in the above description may be read as "circuit", "step", "procedure", "process", or "processing circuitry".

The embodiments and modifications of the present disclosure have been described above. Two or more of these embodiments and modifications may be implemented in combination. Alternatively, one or more of them may be partially implemented. The present disclosure is not limited to the above embodiments and modifications, and various modifications can be made as needed.

**Reference Signs List**

10: flood depth estimation apparatus; 11: processor; 12: memory; 13: storage; 14: communication interface; 15: electronic circuit; 21: inundated area estimation unit; 22: flood depth estimation unit; 23: data acquisition unit; 24: inundated area dividing unit; 25: water level calculation unit; 26: depth calculation unit; 27: inference execution unit; 31: input image; 32: inundated area data; 33: inundation estimation data; 34: elevation data; 40: subject area; 41: inundated area; 42: divided area; 43: boundary area; 51: learned model; 60: training apparatus; 61: processor; 62: memory; 63: storage; 64: communication interface; 71: model generation unit.

**Claims**

1. A flood depth estimation apparatus comprising:

   a data acquisition unit to acquire inundated area data indicating an inundated area in a subject area, inundation estimation data indicating for the subject area, a boundary where a water level changes when inundation occurs, and elevation data indicating an elevation at each point in the subject area;
   an inundated area dividing unit to divide the inundated area indicated in the inundated area data acquired by the data acquisition unit, into one or more divided areas based on the boundary indicated in the inundation estimation data;
   for each of the one or more divided areas obtained by the division by the inundated area dividing unit, a water level calculation unit to calculate the water level in a subject divided area, from the elevation indicated in the elevation data on a boundary area of the subject divided area; and
   for the each point, a depth calculation unit to calculate a flood depth at a subject point, from the elevation indicated in the elevation data on the subject point, and the water level calculated by the water level calculation unit for the divided area including the subject point.

2. The flood depth estimation apparatus according to claim 1, wherein
   the water level calculation unit calculates the water level in the overall subject divided area, from a statistic of the elevation indicated in the elevation data on a plurality of points in a boundary area of the subject divided area.

3. The flood depth estimation apparatus according to claim 1, wherein

   the water level calculation unit estimates the elevation at each point in the interior of the subject divided area by filling the elevation indicated in the elevation data for the boundary area of the subject divided area toward the interior of the subject divided area, and calculates from the estimated elevation at the each point in the interior, the water level at the each point in the interior, and
   the depth calculation unit calculates from the elevation indicated in the elevation data on the subject point and the water level at the subject point, the flood depth at the subject point.

4. The flood depth estimation apparatus according to any one of claims 1 to 3 further comprising
   an inundated area estimation unit to generate the inundated area data from an input image which is remote sensing data acquired by performing detection on the subject area.

5. A flood depth estimation method comprising:

by a computer, acquiring inundated area data indicating an inundated area in a subject area, inundation estimation data indicating for the subject area, a boundary where a water level changes when inundation occurs, and elevation data indicating an elevation at each point in the subject area;
by the computer, dividing the inundated area indicated in the inundated area data, into one or more divided areas based on the boundary indicated in the inundation estimation data;
by the computer, for each of the one or more divided areas, calculating the water level in a subject divided area, from the elevation indicated in the elevation data on a boundary area of the subject divided area; and
by the computer, for the each point, calculating a flood depth at a subject point, from the elevation indicated in the elevation data on the subject point, and the water level calculated for the divided area including the subject point.

6. A flood depth estimation program causing a computer to function as a flood depth estimation apparatus to execute:

a data acquisition process to acquire inundated area data indicating an inundated area in a subject area, inundation estimation data indicating for the subject area, a boundary where a water level changes when inundation occurs, and elevation data indicating an elevation at each point in the subject area;
an inundated area dividing process to divide the inundated area indicated in the inundated area data acquired by the data acquisition process, into one or more divided areas based on the boundary indicated in the inundation estimation data;
for each of the one or more divided areas obtained by the division by the inundated area dividing process, a water level calculation process to calculate the water level in a subject divided area, from the elevation indicated in the elevation data on a boundary area of the subject divided area; and
for the each point, a depth calculation process to calculate a flood depth at a subject point, from the elevation indicated in the elevation data on the subject point, and the water level calculated by the water level calculation process for the divided area including the subject point.

7. A flood depth estimation apparatus comprising
a flood depth estimation unit to take an input image or inundated area data indicating an inundated area in a subject area, which is remote sensing data acquired by performing detection on the subject area, elevation data indicating an elevation at each point in the subject area, and inundation estimation data indicating for the subject area, a boundary where a water level changes when inundation occurs, as input, and to estimate a flood depth at the each point, using a learned model that outputs the flood depth at the each point.

8. A training apparatus comprising
a model generation unit to use an input image or inundated area data indicating an inundated area in a subject area, which is remote sensing data acquired by performing detection on the subject area, elevation data indicating an elevation at each point in the subject area, and inundation estimation data indicating for the subject area, a boundary where a water level changes when inundation occurs, as learning data, and to generate a learned model that outputs a flood depth at the each point.

## Fig. 1

FLOOD DEPTH ESTIMATION APPARATUS 10

PROCESSOR 11

INUNDATED AREA ESTIMATION UNIT 21

31

32

FLOOD DEPTH ESTIMATION UNIT 22

DATA ACQUISITION UNIT 23

33, 34

COMMUNICATION INTERFACE 14

INUNDATED AREA DIVIDING UNIT 24

WATER LEVEL CALCULATION UNIT 25

DEPTH CALCULATION UNIT 26

MEMORY 12

STORAGE 13

Fig. 2

START

↓

SPECIFY
INUNDATED AREA 41 ⟿S11

↓

SPECIFY FLOOD DEPTH ⟿S12

↓

END

EP 4 390 469 A1

# Fig. 3

START

↓ S21

ACQUIRE DATA

↓ S22

DIVIDE INUNDATED AREA 41 INTO
ONE OR MORE DIVIDED AREAS 42

↓ S23

CALCULATE WATER LEVEL OF
EACH DIVIDED AREA 42

↓ S24

CALCULATE FLOOD DEPTH AT
EACH POINT

↓

END

EP 4 390 469 A1

# Fig. 4

(A) 40 41

(B) 40

INUNDATION LEVEL

| | |
|---|---|
| | 0m – 0.5m |
| | 0.5m – 1m |
| | 1m – 3m |
| | RIVER AND THE LIKE |

(D) 42A
42B

42C    40

(C)

40

EP 4 390 469 A1

Fig. 5

## Fig. 6

FLOOD DEPTH ESTIMATION APPARATUS — 10

ELECTRONIC CIRCUIT — 15

INUNDATED AREA ESTIMATION UNIT — 21

31

32 — 22

FLOOD DEPTH ESTIMATION UNIT

DATA ACQUISITION UNIT — 23

33, 34

COMMUNICATION INTERFACE — 14

INUNDATED AREA DIVIDING UNIT — 24

WATER LEVEL CALCULATION UNIT — 25

DEPTH CALCULATION UNIT — 26

EP 4 390 469 A1

# Fig. 7

# Fig. 8

FLOOD DEPTH ESTIMATION APPARATUS ~ 10

PROCESSOR ~ 11

INUNDATED AREA ESTIMATION UNIT ~ 21

MEMORY ~ 12

FLOOD DEPTH ESTIMATION UNIT ~ 22

INFERENCE EXECUTION UNIT ~ 27

31

32

33, 34

14

COMMUNICATION INTERFACE

STORAGE ~ 13

LEARNED MODEL ~ 51

EP 4 390 469 A1

## Fig. 9

TRAINING APPARATUS — 60

PROCESSOR — 61

31, 33, 34

MODEL GENERATION UNIT — 71

64 COMMUNICATION INTERFACE

MEMORY — 62

STORAGE — 63

LEARNED MODEL — 51

## INTERNATIONAL SEARCH REPORT

| International application No. |
| --- |
| **PCT/JP2022/003705** |

### A. CLASSIFICATION OF SUBJECT MATTER

*G01W 1/00*(2006.01)i; *G06Q 50/26*(2012.01)i
FI: G06Q50/26; G01W1/00 Z

According to International Patent Classification (IPC) or to both national classification and IPC

### B. FIELDS SEARCHED

Minimum documentation searched (classification system followed by classification symbols)

G01W1/00; G06Q50/26

Documentation searched other than minimum documentation to the extent that such documents are included in the fields searched

Published examined utility model applications of Japan 1922-1996
Registered utility model specifications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2018-132504 A (FUJITSU LTD.) 23 August 2018 (2018-08-23) | 1-8 |
| A | WO 2021/084697 A1 (MITSUBISHI ELECTRIC CORP.) 06 May 2021 (2021-05-06) | 1-8 |

☐ Further documents are listed in the continuation of Box C.  ☑ See patent family annex.

| \* | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 April 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/003705**

| Patent document cited in search report | | | Publication date (day/month/year) | Patent family member(s) | Publication date (day/month/year) |
|---|---|---|---|---|---|
| JP | 2018-132504 | A | 23 August 2018 | (Family: none) | |
| WO | 2021/084697 | A1 | 06 May 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **HONDA ; KENICHI et al.** A Study on Rapid Estimation of Inundation Area and Flood Depth during Heavy Rain Disaster Using Satellite SAR. *Journal of Remote Sensing Society of Japan,* 2020, vol. 40 (3), 158-162